# EUROPEAN PATENT APPLICATION

(11) **EP 3 035 676 A1**
(43) Date of publication of application: **22.06.2016**
(21) Application number: 14199387.3
(22) Date of filing: 19.12.2014
(51) Int. Cl.: H04N 7/18, B60R 1/00

(54) **Surround view system and vehicle including a surround view system**

(71) Applicant: Conti Temic Microelectronic GmbH, 90411 Nürnberg (DE); Application Solutions (Electronics and Vision) Limited, Lewes, East Sussex BN7 2 AQ (GB)
(72) Inventor: Fey, Wolfgang, 88131 Bodolz (DE); Hantsch, Eric, Brighton, BN1 3RQ (GB); Mocek, Vaclav, Seaford, BN25 2PU (GB); Reade, Gideon, Worthing, BN13 3NG (GB); Saward, Ian, Lewes, BN7 1BH (GB); Uppara, Ravikanth, Seaford, BN25 3ER (GB); Weller, Dave, Lewes, BN8 6DF (GB)

(57) **Abstract**

A surround view system (2) for a vehicle (1) is provided which comprises a plurality of image capture devices (5, 6, 7, 8) for capturing a surround view of the environment in the vicinity of the vehicle (1) for display to a driver. At least one of the image capture devices (8) is configured to be detachably attached to the vehicle (1) . The surround view system (2) also includes image processing means (9) for processing the images captured from the plurality of image capture devices (5, 6, 7, 8) and an image display means (10) for displaying the surround view. At least one of the image capture devices (8) is configured to wirelessly transmit the captured image for processing by the image processing means (9).

## Description

The present invention relates to a surround view system for a vehicle and a vehicle including a surround view system.

A vehicle may include one or more cameras for capturing images of the environment around the vehicle. The images captured by the one or more cameras may be used for detecting the presence of objects, such as lanes on the road or traffic signs, or may provide the driver with a view of the immediate vicinity of the vehicle. The view of the immediate vicinity of the vehicle may be used to assist the driver when parking the vehicle or may be used to improve safety as the driver is able to view areas which are screened from him in a normal driving position. Hazards or possible hazards may also be detected from the captured image or images and then provide the driver with a warning or the information may be used in connection with driver assistance systems to actively take control of the vehicle and avoid the hazard.

EP 1 635 572 A2 discloses a camera system for heavy goods vehicle which includes a camera detachably mounted on the rear of the vehicle, in particular on the rear of a trailer. This camera may transmit the captured images to a display in the cab of the vehicle wirelessly.

However, further improvements to camera systems are desirable. Therefore, an object of the present invention is to provide an improved camera system for a vehicle.

This object is solved by the subject matter of the independent claims. Further advantageous features are the subject matter of the dependent claims.

A surround view system for a vehicle is provided which comprises a plurality of image capture devices for capturing a surround view of the environment in the vicinity of the vehicle for display to a driver. At least one of the image capture devices is configured to be detachably attached to the vehicle. The surround view system also includes image processing means for processing the images captured from the plurality of image capture devices and an image display means for displaying the surround view. According to the invention, at least one of the image capture devices is configured to wirelessly transmit the captured image for processing by the image processing means.

The plurality of image capture devices may be arranged on the vehicle in order to capture a surround view of the environment around the vehicle, whereby at least one of the image capture devices is configured to wirelessly transmit the captured image and at least one of the image capture devices is configured to be detachably attached to the vehicle. Consequently, a surround view system is provided that is suitable for use on a wider range of vehicles. For example, the surround view system may be used for a vehicle with a non-permanent structure such as a detachable trailer, a detachable container or detachable loadbed, since at least one of the image capture devices may be detachably attached to this non-permanent structure. The detachable image capture device may be used together with further image capture devices, which may be permanently or detachably attached to a permanent structure of the vehicle, such as the pulling vehicle, to provide a surround view of the environment in the vicinity of the vehicle with the non-permanent structure coupled to the permanent structure.

A surround view is a composite view composed from the images captured by the image capture device. Several image capture devices, for example four or six, may be provided on the vehicle. The images from each of the image cpature may be combined to provide a surround view such as a 360° image in the form of a top view, also denoted as a bird' s eye view, or a panoramic view. The images from adjacent cameras, for example a front camera and a side camera, may overlap with one another in order to provide an uninterrupted 360° surround view.

The image capture device or devices that are configured to be detachably attached to the vehicle may also be configured to wirelessly transmit the captured image for processing by the image processing means. This embodiment is particularly useful for embodiments in which the image capture device is detachably attached to a non-permanent structure since further hardwired connections between the image capture device and the image processing means are not required.

The use of one or more detachable image capture devices may also be useful for applications in which theft of the image capture device may be more likely. For example, non-permanent structure such as detachable trailers, containers and loadbeds may be stored separately from the pulling vehicle and are typically stored outside. This provides the potential thief with more opportunity to remove an image capture device attached to the container unobserved. This possibility can be avoided by removing the detachable image capture device.

Non-permanent structures, such as containers, are typically used with a number of pulling vehicles since. By using a detachable image capture device belonging to a surround view system associated with the pulling vehicle, this detachable device can be attached to a variety of non-permanent structures and automatically be recognised by the remaining components of the surround view system.

In an embodiment, the image processing means is configured to process images captured by the plurality of image capture devices to provide a 360° view of the environment in the vicinity of the vehicle. The 360° view may be a top view also called bird's eye view or may be a panoramic view of the environment in the vicinity of the vehicle.

The image processing means may process the individual images captured by the plurality of image capturing devices in such a way that images from adjacent cameras are aligned to provide a seamless view. The image captured by an image capture device may include a portion which overlaps with a portion of the image captured by an adjacent image capture device. The image processing means may identify a feature within the overlapping region in each of the individual images and then compensate for any difference in the position to align the images.

The image processing means may further include a calibration means for calibrating at least the image captured by the at least one detachable image capture device. As the detachable image capture device is detachable, its position and the view of the environment captured by the image may be different after being demounted and remounted. Any misalignment may be compensated by software calibration. The image processing means may include calibration means for calibrating the image capture device online.

The image processing means may comprise or be coupled to a receiver for receiving images from at least one of the image capture devices wirelessly. In an embodiment, the detachable image capture device includes a transmitter for transmitting images wirelessly to the image processing means.

In an embodiment, the image capture device comprises a magnetic mount for detachably attaching the image capture device to the vehicle. In addition to the magnetic mount, the image capture device may further include a mechanical fixture, for example a plug and socket type arrangement or a vertically slidable arrangement. The mechanical fixture may be configured to engage a permanently mounted fixture on the vehicle. The position of the camera device may be secured by means of securing means, for example a strap, or mechanical fixtures such as clips, screws, bolts etc.

The image capture device may include a lens, such as a wide field of view lens, in order that the camera can capture an image from a wider area. In some embodiments, the lens is a fisheye lens and may be either a 180° fisheye lens, in which the diagonal of the image captures 180°, or may be a circular fisheye lens in which the lens captures a 180° image vertically, horizontally and diagonally. In an embodiment, the fisheye lens captures a 190° image horizontally and 190° diagonally and less than 190° vertically.

The image capture device may be a video camera and may be digital or analogue. The image capture device may capture a number of frames per second, for example around 35 frames per second, to provide a near real-time image of the environment in the vicinity of the vehicle.

The image capture device may include a local power supply, such as a battery which may be rechargeable. The local power supply may be charged by a local energy supply, such as a solar cell.

The image detachable image capture device may further include location determining means, such as a GPS device or a GPRS device or a device using the Galileo system. The location determining means may be used to determine the position of the image capture device, for example to prevent theft or to determine the position of the vehicle on which the image capture device is mounted.

In an embodiment, the image capture device further comprises motion detection means. The motion detection means may be configured such that power is supplied to the image capture device only when the vehicle is in motion. This embodiment may be used for an image capture device, such as a detachable image capture device, which includes a local power supply. This local power supply may have limited lifetime in the case of a battery, for example. The time frame over which the image capture device can be used may be extended if the image capture device is only switched on when the vehicle is moving.

A vehicle is also provided which includes a surround view system according to one of the embodiments described herein. The vehicle may include a permanent structure, such as a pulling vehicle or tractor unit and a non-permanent structure which may be detachable from the permanent structure. For example, the non-permanent structure may be pulled unit such as a trailer, container or a loadbed which can be attached and detached from the pulling vehicle.

The at least one detachable image capture device may be detachably attached to the non-permanent structure. This is useful as the detachable image capture device may be attached to different non-permanent structures, for example different containers towed by the pulling vehicle. The non-permanent structure may include a fitment adapted to mate with a mount of the image capture device. The fitment may be mounted at a convenient position of the non-permanent structure, such as a frame of vehicle or a number plate pocket. The detachable image capture device may also include means such as a transmitter or a transceiver for transmitting images wirelessly for processing by the image processing means. The image processing means may be arranged in the permanent structure of the vehicle.

Embodiments will now be described with reference to the drawings.
Figure 1 illustrates a schematic top view of a vehicle including a surround view system.
Figure 2 illustrates a schematic top view of the surround view captured by the surround view system of the vehicle.
Figure 3 illustrates a schematic top view of calibration of images captured by the surround view system of the vehicle.

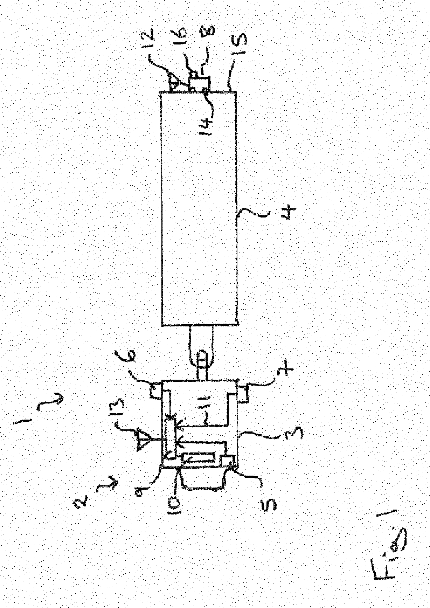

Figure 1 illustrates a schematic top view of a vehicle 1 including a surround view system 2. In this particular embodiment, the vehicle 1 includes a pulling vehicle 3 and a pulled unit 4 such as a container, load bed or trailer. The pulling vehicle may also be denoted as a tractor unit.

The surround view system 2 includes four image capture devices 5, 6, 7, 8 which are arranged on the vehicle 2 to capture a surround view of the environment in the vicinity of the vehicle 2. The image capture device 5 is arranged at the front of the pulling vehicle 3 and captures an image to the front of the vehicle 2. The image capture devices 6, 7 are arranged on the pulling vehicle 3 on the right side and left side of the pulling vehicle 3 and capture an image to the right and to the left of vehicle 2. The image capture device 8 is detachably mounted to the pulled unit 4 and captures an image to the rear of the pulled unit 4 of the vehicle 1.

The image capture devices 5, 6, 7, 8 may each include a wide field lens or a fisheye lens in order that each image capture device captures a wide region of the environment in the vicinity of the vehicle 2.

The surround view system 2 further includes image processing means 9 for processing images captured from the image capture devices 5, 6, 7, 8 and an image display means 10 for displaying the surround view, for example to the driver of the vehicle 1.

The image processing means 9 may be provided as one or more further algorithms or computer programs in an image processing device coupled to the image capture devices 5, 6, 7, 8. The images captured by the image capture devices 5, 6, 7, 8 may be combined by the image processing means 9 to form a composite image or surround view of the environment in the vicinity of all sides of the vehicle 2. In some embodiments, the composite image provides a seamless 360° surround view. The surround view may be top view or a panoramic view. the image processing means 9 may enable mapping of an image from a fisheye lens to a single plane.

The image display means 10 may be situated in the vehicle so that the vehicle driver is able to view the images in the driving position. The captured images may be used to check clearances around the vehicle or to enable the driver to detect objects in the vicinity of the vehicle which he cannot see directly from the driving position.

In the embodiment illustrated in figure 1, the image capture devices 5, 7, 6 are fixedly mounted on the pulling vehicle 3 and are coupled to the image processing means 9 by means of wired connections 11. The fourth image captured means 8 which is detachably mounted to the pulled unit 4, is wirelessly coupled with the processing means 9.

Therefore, the image capture device 8 includes a transmitter 12 and the image processing means 9 comprises a receiver 13 to enable the images captured by the image capture device 8 to transmitted from the image capture device 8 and received by the image processing means 9. The receiver 13 may be a component of the image processing means 9 or may be included in a separate unit which is coupled to the image processing means 9.

The image capture device 8 is mounted on a fitment 14 which is provided on the rear side 15 of the pulled unit 4. This fitment 14 may be arranged on a portion of the rear side 15 which is easily accessible. For example, the fitment 14 may be formed as part of a number plate holder. The fitment 14 may be used together with other fixings or fixing arrangements. For example, the image capture device 8 may include a magnetic mount which such that it is attached to steel portions of the pulled unit 4 by attractive magnetic force. The fitment 14 may provide an additional mechanical securing means.

The image capture device 8 may include a local power source 16 such as a battery. The detachable image capture device 8 may further include location determining means, for example a GPS device or a Gary layer compatible device, for example. The detachable image capture device 8 may further include motion detection means, such that the power supply only supplies power to the image capture device if the vehicle 2 is in motion.

The detachable image capture device 8 is useful for vehicles in which the non-permanent structure, such as the pulled unit 4, is detachable from the pulling vehicle 3 and is used in combination with a number of different pulling vehicles 3. Therefore, the image capture device 8 of the surround view system 2 associated with the permanent structure or pulling vehicle 3 may be attached to different non-permanent structures 4 which are to be pulled. Since the images are transmitted wirelessly from the detachable image camera 8 to the image processing means 9 of the pulling vehicle 3 and the image capture device 8 as a local power supply, no further wiring connections are required to couple the image capture device 8 to the remainder of the surround view system 2.

The image capture devices 5, 6, 7 mounted on the pulling vehicle 3 are fixedly attached to the pulling vehicle in this embodiment. However, one or more of the image capture devices 5, 6, 7 may be provided by a detachable image device 8 and/or may transmit the images captured wirelessly to the image processing means 9.

The surround view system 2 illustrated in figure 1 includes four image capture devices 5, 6, 7, 8. However, the surround view system 2 may also include additional image capture devices in order to provide a seamless surround view, if necessary. For example, an additional image capture device could be mounted on the right and left side of the pulled unit 4.

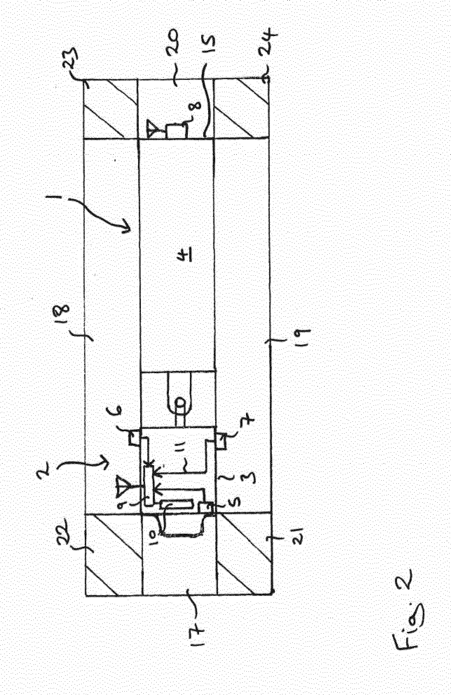

Figure 2 illustrates a schematic top view of the surround view by the surround view system 2 of the vehicle 1. The camera 5 captures a region 17 to the front of the vehicle, the camera 6 captures a region 18 on the right side of the vehicle 2, the image capture device 7 captures region 19 to the left of the vehicle 2 and the image capture device 8 captures a region 20 to the rear of the vehicle 2.

The edge regions of the image 17 overlap with edge regions of the regions 19 and 20 forming two overlapping areas 21, 22. Similarly, the area 18 captured by image capture device 6 overlaps in a peripheral region 23 with a peripheral region of the image 20 captured by the image capture device 8. The opposing peripheral region of the image 20 captured by the image capture device 8 overlaps in area 24 with region of the image 19 captured by the image capture device 7. The overlapping areas 21, 22, 23, 24 enable an unterrupted or seamless 360° surround view of the environment in the vicinity of the vehicle 1 to be obtained by forming a composite image from the images captured by the four image capture devices, 5, 6, 7, 8. The overlapping regions 21, 22, 23, 24 may be used to calibrate the image capture devices 5, 6, 7, 8.

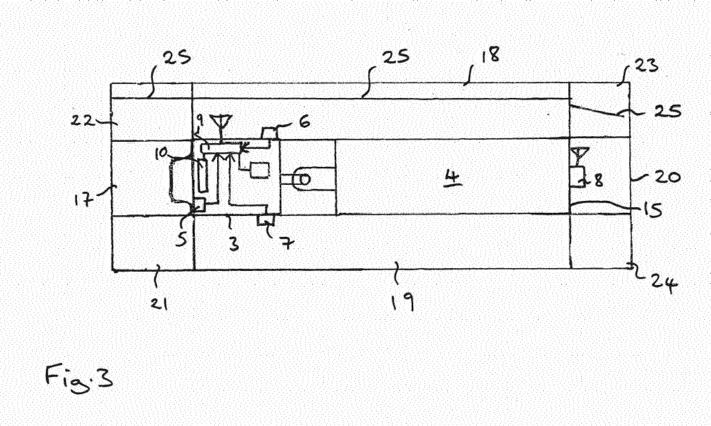

Figure 3 illustrates a schematic top view of calibration of images captured by the surround view system 2 of the vehicle 1.

Calibration of the image capture devices 5, 6, 7, 8 may be performed during manufacture of the vehicle. However, as the image capture device 8 is detachable, it's position may deviate. A system for calibrating the image capture devices automatically whilst the vehicle is driving may be used to compensate for misalignment which may occur due to a change in the position of one or more of the image capture devices 5, 6, 7, 8.

It is desirable that the parameters of the camera image coordinate system correspond to those of the real world, for example, to those of the vehicle coordinate system so that the position of features captured in images by the camera can be accurately mapped to their position in the real world. This mapping may be used for detecting objects in the vicinity of the vehicle, for example hazards. This information may be used to warn the driver of the vehicle or may be used by driver assistance systems so that the vehicle driver assistance system automatically takes appropriate action to avoid the hazard.

A method for calibration of a camera on a vehicle may calibrate camera rotational parameters, *ϕ*, *θ, ψ*, and/or camera translational parameters, *x*, *y*, *z*, in a camera image coordinate system. The method comprises, whilst the vehicle is moving relative to the ground, calibrating the camera rotational parameters, *ϕ*, *θ, ψ,* using a parallel geometrical method, and calibrating the camera translational parameters x_{c}, y_{c}, z_{c}.

The camera rotational parameters are denoted by the Euler angles *ϕ*, *θ*, *ψ* and the camera translational parameters are denoted by the Cartesian coordinate system x_{c}, y_{c}, z_{c}, where z_{c} is height of the camera above the ground, x_{c} denotes the direction in length of car and y_{c} is the direction in the width of the car.

The camera rotational parameters *ϕ*, *θ, ψ* and, optionally, the height z_{c} may be determined using a parallel geometric method such as that disclosed in WO 2012/143036 A1. In a parallel geometric method, analysis of the images to identify one or more features in the images and to track the trajectory of the features may be performed.

For example, the position of a longitudinal structure such as a lane marking 25 may be identified in the image 17 captured by the front camera 5, the image 18 captured by the right side image capture device 6 and the image 20 captured by the rear image capture device 8. If a difference in the position of the longitudinal structure 25 in the images 17, 18, 20 is determined, it can be assumed that the position of the detachable rear image capture device 8 is incorrect and the difference compensated.

If the height of the image capture device is to be determined, this may be performed by recording the speed of the vehicle whilst tracking the longitudinal features and determining the distance that a feature has moved in the image in a predetermined period of time. The height of the image capture device may be calibrated by determining a difference between the distance measured from the camera image and a predicted distance calculated from the vehicle speed, calculating an offset in the height of the camera from the difference and adding the offset to a stored value of the height of the image capture device.

The images captured by the image capture devices 5, 6, 7, 8 may also be processed to harmonise differences between the images, for example contrast, brightness, colour. For example, it can be assumed that the two images representing the same real world area should have the same pixel statistics. Therefore, by determining the pixel statistics of the pixels representing the same real world area in the overlap region of the two images, a difference in the pixel statistics in this overlap region between the two images can be determined. This difference can be reduced in order to harmonise the combined image produced from the two individual images. Methods for combining individual images to for a combined or composite image are disclosed in WO 2011/082716 A1, for example.

## Claims

1. A surround view system (2) for a vehicle (1), comprising:
a plurality of image capture devices (5, 6, 7, 8) for capturing a surround view of the environment in the vicinity of the vehicle (1) for display to the driver, at least one of the image capture devices (8) being configured to be detachably attached to the vehicle (1),
image processing means (9) for processing the images captured from the plurality of image capture devices (5, 6, 7, 8),
image display means (10) for displaying the surround view, **characterised in that**
at least one of the image capture devices (8) is configured to wirelessly transmit a captured image for processing by the image processing means (9).

2. The surround view system (2) according to claim 1,
**characterised in that**
the at least one image capture devices (8) that is configured to be detachably attached to the vehicle (1) is configured to wirelessly transmit a captured image for processing by the image processing means (9).

3. The surround view system (2) according to claim 1 or claim 2,
**characterised in that**
the image processing means (9) is configured to process images captured by the plurality of image capturing devices (5, 6, 7, 8) to provide a 360° view of the environment in the vicinity of the vehicle (1).

4. The surround view system (2) according to one of claims 1 to 3,
**characterised in that**
the image processing means (9) further comprises calibration means for calibrating at least the image captured by the at least one detachable image capture device (8).

5. The surround view system (2) according to one of claims 1 to 4,
**characterised in that**
the at least one image capture devices (8) that is configured to be detachably attached to the vehicle (1) comprises a magnetic mount for detachably attaching the image capture device (8) to the vehicle (1).

6. The surround view system (2) according to one of claims 1 to 5,
**characterised in that**
the image capture device (5, 6, 7, 8) is a video camera.

7. The surround view system (2) according to one of claims 1 to 6,
**characterised in that**
the at least one image capture devices (8) that is configured to be detachably attached to the vehicle (1) comprises a local power supply (16).

8. The surround view system (2) according to claim 7,
**characterised in that**
the local power supply (16) is a rechargeable battery.

9. The surround view system (2) according to one of claims 1 to 8,
**characterised in that**
the at least one image capture devices (8) that is configured to be detachably attached to the vehicle (1) further comprises location determining means.

10. The surround view system (2) according to one of claims 1 to 9,
**characterised in that**
the at least one image capture devices (8) that is configured to be detachably attached to the vehicle (1) further comprises motion detection means.

11. A vehicle (1), comprising the surround view system (2) according to one of claims 1 to 10.

12. The vehicle (1) according to claim 11, further comprising a non-permanent structure (4).

13. The vehicle (1) according to claim 11 or claim 12,
**characterised in that**
the at least one detachably attached image capture device (8) is detachably attached to the non-permanent structure (4).

14. The vehicle (1) according to claim 13,
**characterised in that**
the non-permanent structure (4) comprises a fitment (14) adapted to mate with a mount of the image capture device (8).

15. The vehicle (1) according to claim 14,
**characterised in that**
the fitment (14) is adapted to mate with a number plate pocket.
